# EUROPEAN PATENT APPLICATION

(11) **EP 4 310 736 A1**
(43) Date of publication of application: **24.01.2024**
(21) Application number: 23185035.5
(22) Date of filing: 12.07.2023
(51) Int. Cl.: G06N 5/022, G06N 5/04, G06N 7/01, G06N 20/00

(54) **METHOD AND SYSTEM OF GENERATING CAUSAL STRUCTURE**

(30) Priority: 12.07.2022 GB 202210210
(71) Applicant: Impulse Innovations Limited, London W14 OQL (GB)
(72) Inventor: Lawrence, Andrew, London, W14 0QL (GB); Stemberga, Tamara, London, W14 0QL (GB); Kleinegesse, Steven, London, W14 0QL (GB); Chockler, Hana, London, W14 0QL (GB)
(74) Representative: Basck Limited

(57) **Abstract**

Disclosed is a method for generating a causal structure. The method comprising receiving input dataset having variables corresponding to real-life situation; processing the variables to prepare clean dataset; executing causal discovery process on clean dataset; discovering causal structures as outcome of causal discovery process; assigning score to causal structures based on score functions; presenting to user causal structures with assigned score above a threshold value; and reiterating causal discovery process based on: sampled hyperparameters; a user input corresponding to domain knowledge of the real-life situation for optimizing causal structures to generate the causal structure representative of causal relationships between the variables, wherein the causal structure is usable for: predicting an outcome related to the real-life situation, determining action to be undertaken related to the real-life situation, predicting new causal structures, simulating data for the real-life situation.

## Description

### TECHNICAL FIELD

This invention relates to a field of data processing. In particular, though not exclusively, this invention relates to methods and systems of generating a causal structure. The invention further relates to a system with a human-machine interface capable of generating the causal structure from an input dataset and background knowledge.

### BACKGROUND

The use of graphical models to describe dynamics of causality is well known in fields related to statistics, econometrics, epidemiology, genetics and related disciplines. Notably, causal graphs are statistical graphical models used to encode assumptions about data-generating processes. The causal graphs are mathematical models representing causal relationships within an individual system or multiple systems. Typically, the causal graphs facilitate inferences about causal relationships from statistical data. Moreover, the causal graphs help to deal with the epistemology of causation, and the relationship between causation and probability. In addition, a causal discovery aims to infer at least one causal graph from observational data.

Notably, the causal discovery from the observational data is particularly challenging as it is difficult to identify an exact solution. This is resolved by identifying at least one causal graph up to an equivalence class, such as a Markov equivalence class. Notably, multiple directed acyclic graphs (DAGs) are valid given the independence and conditional independence patterns measured in the observational data. However, the Markov equivalence class of the causal graphs can be massive, and the number of equivalence classes increases quickly as the number of observed variables in the causal graphs increases. In this regard, all the multiple DAGs are equally valid, which is processor-intensive. Additionally, there is no perfect conditional independence test, therefore conditional independencies among the causal graphs cannot be known with certainty. Similarly, this problem occurs when the sample size of the causal graphs is small. Conversely, the conditional independence test is computationally expensive to calculate when the number of observed variables is extensive. Henceforth, a space of possible causal graphs that represent the observational data is larger than the space of valid causal graphs.

Moreover, known causal discovery methods make restrictive assumptions as conventionally, purely data-driven approaches are used to determine the at least one causal graph. Examples of the restrictive assumptions may be a linear system is used for identifying the at least one causal structure, all variables interacting on the system have been observed. Such restrictive assumptions often are not relevant in a real-life situation. Furthermore, a user may only have a basic knowledge to make assumptions related to the causal discovery methods, but said assumptions may not be enough to validate a required assumption. Therefore, the user is only able to capture a sub-section of the at least one causal graph, thereby providing an incomplete at least one causal graph. Herein, defining a hierarchy of variables is possible. Furthermore, drawing the entire causal graph based on the basic knowledge known by the user is time-intensive and laborious in nature.

Moreover, a number of causal graphs inferred is super-exponential in the number of variables pertaining to the real-life situation. Furthermore, the number of causal graphs increases when causal sufficiency is not assumed the Markov Equivalence class of causal graphs provides a mixed graph, such as a maximal ancestral graph, a partial ancestral graph, or a completed partially directed acyclic graph. However, the causal graph which depicts the real-life situation accurately is still not determined, and needs to be identified from a potentially massive class of graphs.

Therefore, in light of the foregoing discussion, there remains a need for an improved method for generating causal graphs. It is an object of the invention to address at least one of the above problems, or another problem associated with the prior art.

### SUMMARY OF THE INVENTION

A first aspect of the invention provides a method of generating a causal structure comprising:
receiving an input dataset having a plurality of variables corresponding to a real-life situation;
processing the plurality of variables in the input dataset to prepare a clean dataset;
executing a causal discovery process on the clean dataset by employing one or more causal discovery algorithms;
discovering one or more causal structures as an outcome of the causal discovery process;
assigning a score to the one or more causal structures based on one or more score functions;
presenting to a user the at least one of the one or more causal structures with the assigned score above a threshold value; and
reiterating the causal discovery process based on at least one of:
   one or more sample hyperparameters obtained from previously executed causal discovery algorithms, from previously saved causal structures and/or from an optimisation space;
   a user input corresponding to domain knowledge of the real-life situation,
   for optimizing the one or more causal structures to generate the causal structure representative of causal relationships between the plurality of variables, wherein the causal structure is usable for at least one of: predicting an outcome related to the real-life situation, determining an action to be undertaken related to the real-life situation, predicting one or more new causal structures, simulating one or more new causal structures.

In this regard, the plurality of variables for the input dataset are unprocessed and/or has not been cleaned. Additionally, optionally, the plurality of variables corresponds to a real-life situation comprising the plurality of variables. In addition, the plurality of variables represent occurrence or non-occurrence of an event, for example, a range of incompatible events, a characteristic of an individual, characteristics of a population of individuals, or a quantitative value. Notably, the causal structure is a relationship between independent variables, control variables, a confounding variable and dependent variables. It will be appreciated that the plurality of variables have a causal relationship, wherein one variable may cause a change in another variable. In a first example, there may be a real-life situation relating ice-cream sales and a number of shark attacks at a beach. The plurality of variables concerning the real-life situation may be ambient temperature, shark attacks, and ice-cream sales. The causal structure may be a relationship between the ice-cream sales and the number of shark attacks, wherein a strong correlation may be found between the ice-cream sales and the number of shark attacks as the ice-cream sales and the number of shark attacks are steadily increasing at a similar rate. Hence, it may look like that the ice-cream sales and the shark attacks are related to each other and one could cause the other, but the confounding variable may be the ambient temperature. Herein, the ambient temperature may be higher than a threshold temperature value, which leads people to swim at the beach, so it is more likely that there are shark attacks. Furthermore, the ambient temperature being higher than a threshold temperature value may also lead people to buy ice-creams, thereby increasing the ice-cream sales.

In a second example, there may be a real-situation relating to customers churning in a business. Herein, the plurality of variables may be forms of communicating to a customer by the business (for example, such, marketing emails, social media posts, discount text messages), number of times the business communicates with the customer, discounts provided by the business to the customer, number of times the customer faces a bug while using a product sold by the business, a type of bug faced by the customer, a quality of support received by the customer from the business. The causal structure may be a relationship between the number of times the customer faces the bug while using the product sold by the business and the discounts provided by the business to the customer, wherein an often occurring scenario may be that the customer who faces a highest number of bugs compared to a remaining number of customers (i.e., have the most trouble with the product) may receive a large discount. Hence, it may look like that the discounts provided by the business to the customer may lead to customers churning, but the confounding variable may be the type of bug faced by the customer. Herein, when the confounding variable is controlled, the discounts may reduce the likelihood of the churning of the customers.

Optionally, plurality of variables comprises additional information that is removed to prepare the clean dataset from the input dataset, wherein said clean dataset is at least one of: accurate, complete, consistent. Examples of such additional information may include, but are not limited to, errors, inconsistent information, and irrelevant information. Optionally, at the step of processing the plurality of variables in the input dataset to prepare the clean dataset, preprocessing techniques are employed to extract the clean dataset. Examples of the preprocessing techniques may include, but are not limited to, feature engineering, data splitting, imputation of missing values, removing outliers. Such preprocessing techniques are well-known in the art. Optionally, the preprocessing techniques are implemented using any one of: a Machine Learning (ML) algorithm, an Artificial Intelligence (AI) algorithm, a Data Science (DS) algorithm, for preparing the clean dataset.

The term *"causal discovery process"* as used herein refers to a process configured to explore causal relationships and/or identify causal relationships between at least two variables in the plurality of variables to generate the causal structure from the clean dataset. In this regard, the causal discovery process explores causal relationships and/or identifies causal relationships by analysing observational data. Herein, the term *"observational data"* refers to data corresponding to the real-world situation that is collected through at least one of: measurements of each of the plurality of variables in their current state with no deliberate intervention or manipulation by a person, observations made by a person. For example, a randomised control trial (RCT) of effect of smoking on lung cancer may be conducted on participants suffering from lung cancer to determine a causal relationship between smoking and development of lung cancer on said participants. Herein, the observational data may be collected as observations on smoking behaviour, measurement of the effect of smoking on development of the lung cancer. Herein, it may be unethical to intervene, i.e., it may be unethical to force the participants to smoke.

The causal discovery process is used to procure the one or more causal structures which could belong to a Markov Equivalence Class of graphs. Herein, the Markov Equivalence Class of graphs defines a set of directed acyclic graphs (DAGs) that are all equally likely based on the input dataset. Optionally, at the step of discovering the one or more causal structures, the DAGs are sampled from a Markov Equivalence Class of graphs and assigned a score. In this regard, the causal discovery process enables discovery of the one or more causal structures. Typically, one or more methods of causal discovery process for full causal discovery of the one or more causal structures and/or causal feature selection may be used to infer the causal structure from the clean dataset. Optionally, the causal feature selection may be performed if the plurality of variables is provided as input dataset.

The one or more causal structures are scored using one or more score functions. Beneficially, the scoring of the one or more causal structures enables to evaluate and rank the one or more causal structures based on how accurately the observational data is explained and/or an extent of capturing underlying causal relationships between the at least two variables in the plurality of variables. Moreover, a score corresponding to the one or more causal structures is assigned to analyse the one or more causal structures. The scores assigned to the one or more causal structures are beneficial, as it helps the user to know which at least one of the one or more causal structures are relevant to the user, based on the real-life situation. Examples of the one or more score functions may include, but is not limited to, Bayesian Information Criterion (BIC)/ Minimum Description Length (MDL) score, Bayesian Gaussian equivalent (BGe) score.

The term *"threshold value"* as used herein refers to a particular score used for classification of the one or more causal structures. Herein, the assigned score of the one or more causal structures is greater than the threshold value, when the one or more causal structures to deemed likely to accurately represent the underlying causal relationships between each of the plurality of variables. Conversely, the assigned score of the one or more causal structure is less than or equal to the threshold value, when the one or more causal structures is deemed less likely to accurately represent the underlying causal relationships between each of the plurality of variables. In an instance, when the assigned score of the at least one of the one or more causal structures is greater than the threshold value, said at least one of the one or more causal structures is presented to the user. In another instance, when the assigned score of the at least one of the one or more causal structures is lesser than or equal to the threshold value, said at least one of the one or more causal structures is not presented to the user. Optionally, the user selects at least one from the one or more causal structures based on the threshold value. For instance, the threshold value of one or more causal structures may be 5. The one or more causal structures comprises four causal structures, namely, Structure A, Structure B, Structure C and Structure D. The four causal structures are assigned with scores, wherein the Structure A has a score of 3, the Structure B has a score of 5, the Structure C has a score of 8, and the Structure D has a score of 10. Subsequently, the Structure A is rejected as the assigned score is below the threshold value. The Structure B is rejected as the assigned score is same as the threshold value. Consequently, the Structure C and the Structure D are presented to the user as their scores are above the threshold value.

Notably, the causal discovery process is repeated until the at least one of the one or more causal structures is generated. Herein, the term *"hyperparameters"* define settings and/or configurations of the previously executed causal discovery algorithms, previously saved causal structures and/or the optimisation space. Herein, in the one or more sampled hyperparameters, the hyperparameters are sampled from an entire search space (i.e., based on an outcome, the settings, and/or the configurations of the previously executed causal discovery algorithms, previously saved causal structures and/or the optimisation space) to define a next type of the causal discovery process. Herein, the search space is mixed where some hyperparameters are continuous and others are discrete (i.e., non-continuous).

A technical benefit achieved by obtaining the one or more sampled hyperparameters from previously executed causal discovery algorithms for optimization is to inform where to search next in a next processing step for optimization. For example, there may be a constraint-based causal discovery process in which a p-value threshold is searched. Herein, the one or more causal structures formed from a first iteration of the constraint-based causal discovery process may either be sparse or dense. Hence, based on the p-value threshold, a new p-value threshold is selected. The update may be based on a rule, i.e., when the one or more causal structures formed may be sparse, incrementally increase the next p-value threshold with respect to the p-value threshold, and when the one or more causal structures formed may be dense, incrementally decrease the next p-value threshold with respect to the p-value threshold.

A technical benefit achieved by obtaining the sample hyperparameters from previously saved causal structures and by obtaining the sample hyperparameters from the optimisation space is to determine where to go in the search space next, which may be trade-off between exploration or exploitation. Herein, when it is previously known that the at least one of the one or more causal structures that may be assigned a high score may have a certain local structure (i.e., X -> Y), the one or more causal structures are exploited around that area in the search space. Herein, the one or more causal structures may comprise the certain local structure (i.e., X -> Y) but with different edges between each of the plurality of variables. Such exploitation is performed to improve the one or more causal structures upon reiteration. Alternatively, the one or more causal structures away from the previous sampled space may be explored to determine whether there may be at least one of the one or more causal structures with a high score elsewhere in the search space.

Examples of sample hyperparameters obtained from previously executed causal discovery algorithms may include, but are not limited to, names of the previously executed causal discovery algorithms and their hyperparameters (for example, such as a PC algorithm, which is a constraint-based causal discovery algorithm, with a linear oracle (conditional independence tester) and a specific p-value threshold), a maximum number of reiterations in the previously executed causal discovery process, and a stability parameter indicative of stability of the previously saved one or more causal structures over multiple reiterations. Examples of the one or more sampled hyperparameters obtained from previously saved causal structures may include, but are not limited to, a previously assigned score to the one or more previously saved causal structures, previous strength values of previous plurality of variables of the previously saved causal structures, and a complexity of the previously saved causal structures. Examples of the one or more sampled hyperparameters obtained from the optimisation space may include, but are not limited to, an innovation rate, a mutation rate, a crossover rate, a mutation scale, and heat. Herein, the one or more sampled hyperparameters could be obtained from a genetic optimizer. Such genetic optimizers are well-known in the art.

Furthermore, the one or more sampled hyperparameters are adjustable parameters that controls the causal discovery process, wherein the control is either done automatically, or with the help of the user. In this regard, the one or more sampled hyperparameters are received at the step of executing the causal discovery process, in order to refine subsequent iteration of the causal discovery process. Beneficially, reiterating the causal discovery process enables achieving the one or more causal structures and also enables making correctly informed predictions. In this regard, the optimisation space and the at least one of the one or more causal structures with the assigned score are available. The optimization space includes a set of allowed conditional independence testers and their parameters, such as a probability value (p-value) threshold. Optionally, the optimization space may be chosen according to an end goal needed to be performed by the present disclosure. Herein, the end goal may be for predicting the one or more causal structures, or simulating the one or more causal structures. In case of prediction, only accuracy is required with respect to the plurality of variables. In case of simulation, only nodes of the one or more causal structures are required, wherein the nodes are connected to all lower-level nodes, otherwise known as ancestors. Thereby, an optimization budget is defined accordingly. Herein, the optimization budget is a fixed number of experiments performed, either for prediction or for simulation. For example, the one or more causal discovery algorithms and their hyperparameters may be the PC algorithm with a linear oracle (i.e., conditional independence tester) and a p-value threshold of 0.01. The at least one of the one or more causal structures formed from the PC causal discovery may be assigned a score below the threshold value. Subsequently, the one or more sampled hyperparameters may be procured from a next iteration. The linear oracle and the p-value threshold may be changed. Herein, at the next iteration, the linear oracle may be a conditional mutual information oracle and the p-value threshold is the same. Hence, this choice of the one or more causal discovery algorithms, the oracle for constraint-based causal discovery, and the p-value threshold may be used for the causal discovery process and the one or more causal structures are optimized using the one or more sampled hyperparameters.

Furthermore, the causal discovery process is also repeated to receive the optimum required causal structure based on the user input, wherein the user input corresponds to domain knowledge of the real-life situation. In this regard, the one or more causal structures is revised after each iteration of the causal discovery process. Moreover, the user provides an input to the causal discovery process to modify the causal structure. For example, the user may provide an input which helps in resolving a number of edges in the one or more causal structures. Herein, the domain knowledge comprises, but is not limited to, a background knowledge related to the real-life situation, a knowledge related to a hierarchy of variables in the plurality of variables, and similar.

The causal structure is used to understand a cause-and-effect relationship between each variable in the plurality of variables and use that knowledge for predicting the outcome related to the real-life situation. Furthermore, by understanding a direct relationship or an indirect relationship between each variable in the plurality of variables, at least one factor could be identified which optionally has a direct influence or an indirect influence on any outcome, and thereby make an informed decision. This informed decision leads to determine the action which can be implemented to carry out said informed decision in the real-life situation. Continuing in reference with the second example, the causal structure may be usable to predict at least one variable of interest related to the real-life situation. The at least one variable of interest may be a number of customers churning, a delay faced while manufacturing the product, and similar. Furthermore, the action determined to be undertaken related to the real-life situation may be giving a particular customer a set discount.

Furthermore, the causal structure predicts the one or more causal structures upon reiteration, or as a system (in which the causal discovery process is used), changes over time. Hence, the causal structure is generated using the previously-saved causal structures, and the one or more causal structures are predicted by making small modifications in the causal structure that is generated. Additionally, at some instances, there may be a big change that may require a new causal structure be discovered. However, such instances are rare occurrences.

Moreover, the data of the causal structure generated can be simulated for different real-life situations, to generate an artificially-generated data which is representative of the real-life situation for which the causal structure is to be generated. Continuing in reference to the second example, the different real-life situations for which the data may be simulated may be, increase in interest rates, increase in unemployment rates, and the like.

Optionally, the causal structures are used to perform at least one of: predicting the outcome related to the real-life situation, determining the action to be undertaken related to the real-life situation, predicting the one or more new causal structures, simulating data for the real-life situation. A technical benefit of using the causal structures in such a manner is that the causal structures can be utilized in different ways to achieve particular objectives as required by the user, in the real-life situation. Herein, the outcome is predicted by understanding the cause-and-effect relationship between each variable in the plurality of variables, as mentioned above, in order to make informed predictions about outcomes that are expected based on the input dataset and correlations formed.

Optionally, by analysing a relationship between each variable in the plurality of variables, it becomes possible to identify the factors that could have an impact on the outcome. Optionally, the one or more causal structures is inferred by determining new relationships between each variable in the plurality of variables by using the existing input dataset, as previously unknown or previously undiscovered relationships may be determined between each variable in the plurality of variables. Optionally, at least one of the plurality of variables is manipulated within the causal structures, or new variables is added, to simulate the data for the real-life situation. Beneficially, this enables decision making, planning, or testing particular scenarios before implementation in the real-life situation.

In some embodiments, the method further comprises receiving the user input before the step of executing the causal discovery process. The user input optionally comprises additional variables related to background knowledge (i.e., domain knowledge and/or causal constraints) related to a particular domain of the casual discovery process. Moreover, the user input is optionally hierarchical information about the additional variables that define topology of the one or more causal structures to determine a true causal structure. Furthermore, the background knowledge may provide further information regarding existence or absence of certain edges in the one or more causal graphs. A technical effect of providing background knowledge as input from the user is to provide constraints at the step of discovering one or more causal structures to decrease the amount of one or more causal structures discovered, as the discovery of the one or more causal structures is a data-driven approach. Optionally, the background knowledge also enables the user to constrain the plurality of variables related to the particular domain, thereby improving the amount of time taken by the one or more causal discovery algorithms to execute the causal discovery process.

In some embodiments, the method further comprises discovering one or more latent variables and connecting the one or more latent variables to the one or more causal structures. The term *"latent variables"* as used herein refers to variables that were previously unknown and/or not directly observed but are inferred using a mathematical model from another variable. Notably, the one or more latent variables are inferred from the observational data. The one or more latent variables may be inferred using a single observed variable, multi-item scales, predictive models, dimension reduction techniques and the like. For example, the one or more latent variables may include quality of life, business confidence, morale, happiness and conservatism, such variables cannot be measured directly. Typically, the causal discovery is configured to discover the one or more latent variables and enable the user to add and connect latent variables into the causal graphs. Herein, the one or more latent variables are not measurable, but important as they may interact with other variables in the plurality of variables. A technical benefit of connecting the latent variables to the one or more causal structures is that the at least one of the one or more causal structures is formed in an accurate manner and could be used to inform the user where more input dataset may be required. For example, just knowing that there may be a latent variable affecting two nodes, namely, an X node and a Y node, enough information may be available to know what new data pertaining to the real-life situation may be obtained in order to further recover the one or more causal structures. Continuing in reference with the first example, the latent variable may be weather data. Herein, the shark attacks and the ice-cream sales may be related with the weather data.

In some embodiments, the method further comprises estimating a value of at least one of the one or more latent variables. It will be appreciated that the values of the at least one of the one or more latent variables can be inferred from measurements of the observational data. The estimation of the value of the at least one of the one or more latent variables is performed by analysing variance and co-variance of the plurality of variables. For example, a latent variable may be a maximum money that people are willing to pay for goods. Hence, an observational data in a form of transactions is inferred from said latent variable.

Optionally, the at least one of the one or more latent variables is estimated using an unsupervised learning algorithm. Examples of the unsupervised learning algorithms may include, but are not limited to, Principal Component Analysis (PCA) algorithm, an autoencoder, and a variational autoencoder. Herein, the at least one of the one or more latent variables is discovered between at least two variables in the plurality of variables, and the unsupervised learning algorithm is used on the at least two variables in the plurality of variables to estimate the at least one of the one or more latent variables. A technical benefit of estimating the value of at least one of the one or more latent variables is to improve the one or more causal structures by accurately predicting: value of the at least one variable of interest, and counterfactuals. Continuing in reference to the second example, intervention may be determining the customers churned when discounts are given to customers whose age lies in a range of 18 years to 35 years. The counterfactuals may be determining what may happen if a particular customer who is assumed will churn, is given a discount and a sales call.

In some embodiments, the method further comprises saving or exporting the one or more causal structures that were discovered as the outcome of the causal discovery process, for future reference. Notably, saving or exporting the one or more causal structures enables user to edit the one or more causal structures, preserve and share the one or more causal structures which are either discovered, or edited or both. Beneficially, the one or more causal structures may be saved or exported for purposes of modifying the one or more causal structures, building a model based on the one or more causal structures, evaluation of the one or more causal structures and the like.

Optionally, the one or more causal structures are saved in a data repository. Herein, the term *"data repository"* refers to hardware, software, firmware, or a combination of these for storing a given information in an organized (namely, structured) manner, thereby, allowing for easy saving, access (namely, retrieval), updating and analysis of the given information. The data repository may be implemented as a memory of a device (such as the imaging system, the display apparatus, or similar), a removable memory, a cloud-based database, or similar. The data repository can be implemented as one or more storage devices. A technical effect of using the data repository is that is provides an ease of storage and access of processing inputs, as well as processing outputs.

Optionally, the one or more causal structures are exported in the cloud-based database. Herein, in the cloud-based database, the one or more causal structures can be visualised, edited, and used for modelling. Furthermore, the one or more causal structures could be exported to a dictionary representation, or a JSON representation. Moreover, depending on a type of the one or more causal structures, said one or more causal structures could be exported as one or more networkx graphs.

In some embodiments, the step of executing the causal discovery process comprises generating of one of one or more preliminary causal structures, and removing one or more spurious correlations from the one or more preliminary causal structures to produce the one or more causal structures. The term *"spurious correlations"* as used herein refers to a connection between two variables that may only appear to be causal, but is not actually causal. In addition, the spurious correlation may be any dependencies observed between each of the plurality of variables, wherein such dependencies occur merely due to chance and/or unfavourable circumstances. For example, a causal discovery process may be executed to determine sales of a cold beverage in a city. Subsequently, three correlations may be observed. In a first correlation, the sale of the cold beverage is highest when robbery in the city is highest. In a second correlation, the sale of the cold beverage is highest when temperature of the city exceeds 35 degrees Celsius. In a third correlation, the sale of the cold beverage is highest when a particular food item is chosen. Hence, the first correlation and the third correlation seem to be spurious correlations at the step of executing the causal discovery process. Therefore, the first correlation and the third correlation are removed from the one or more causal structures.

In some embodiments, the method further comprises allowing the user to reintroduce the one or more spurious correlations removed from the one or more preliminary causal structures in the causal discovery process. It will be appreciated, that the removed spurious correlations from the one or more preliminary causal structures will be reintroduced in the causal discovery process, based on the user input corresponding to the domain knowledge. There are instances, wherein when the one or more causal discovery algorithms are executed, a conclusion is provided by said one or more causal discovery algorithms that there are one or more spurious correlations based on a small sample size, a number of hyperparameters, and similar, wherein said conclusion may be wrong. Therefore, the users having the domain knowledge is allowed to edit parts of the one or more preliminary causal structures if they know that the conclusion is wrong. In such instances, the user may or may not know the one or more causal structures. Advantageously, the one or more spurious correlations reintroduced in the causal discovery process helps to provide dependencies to the one or more causal structures. As an example, the user may know that two variables in the plurality of variables are related to each other, which may have been deemed to be the one or more spurious correlations. Hence, the user may be allowed to reintroduce the said relation in the causal discovery process.

In some embodiments, the method further comprises ranking the one or more causal structures based on the assigned score. Notably, the one or more causal structures are ranked to describe a quality of the one or more causal structures. In this regard, the ranking helps the user to identify the suitable one or more causal structures to be used. The ranking may be performed using techniques such as, parsimony, including sparsity or low rank, to successfully rank the one or more causal structures based on the assigned score. Herein, the one or more causal structures are ordered based on their assigned scores. A technical benefit of ranking the one or more causal structures based on the assigned score is that only the at least one of the one or more causal structures with a structure that is optimized based on the real-life situation is ranked the highest. Beneficially, ranking the one or more causal structures based on the assigned score saves the processing resources, is time efficient, and the user if able to receive highly-relevant data based on the real-life situation. Furthermore, the user is able to process the one or more causal structures easily, thereby procuring the at least one of the one or more causal structures that is optimized.

In some embodiments, the step of presenting to the user the at least one of the one or more causal structures comprises displaying the at least one of the one or more causal structures onto a Graphical User Interface, GUI, on a display of a user device. In this regard, the GUI provides a space where interaction between the user and the one or more causal structures occurs. It will be appreciated, that the GUI allows the user to view and determine status of the one or more causal structures, on the display of the user device. This enables the user to easily, efficiently, and in a user-friendly manner interact to provide maximum usability. In addition, the GUI makes it easy to visualize the one or more causal structures and provides the user with capability of quickly resolving any uncertain structure in the one or more causal structures. Optionally, the GUI displays data in form of tabular, time series, cross-sectional as well as continuous, binary, categorical, and ordinal variables and so forth.

Optionally, the term *"user device"* refers to an electronic device that is capable of displaying the graphical user interface. The user device is associated with (or used by) the user and is capable of enabling the user to perform specific tasks associated with the method. Furthermore, the user device is intended to be broadly interpreted to include any electronic device that may be used to facilitate decision-making of the user, by at least displaying the visual content. Examples of the user device include, but are not limited to, laptop computers, personal computers, cellular phones, personal digital assistants (PDAs), handheld devices etc. Additionally, the user device includes a casing, a memory, a processor, a network interface card, a microphone, a speaker, a keypad, and a display. Advantageously, the user device displays output of all the steps in the method of the invention.

In some embodiments, the method further comprises allowing the user to resolve any anomalies in the at least one of the one or more causal structures by interacting with the GUI. The term *"anomalies"* as used herein refers to variations in the one or more causal structures under a given plurality of variables to an expected result predicted by the one or more causal structures. Notably, the anomalies provide evidence that the given assumption using which the step of executing causal discovery process is performed may not be a right assumption. Consequently, the user having the domain knowledge removes such assumptions to resolve said anomalies. Herein, the anomalies are used by the user to revise the background knowledge in case the assigned scores of the one or more causal structures lie below the threshold value. Continuing from the previous example, the temperature of the city exceeds 35 degrees Celsius during the month of March. Herein, an incoming flight of migratory birds may be observed, which is correlated to the month of March. However, in a following year, when the temperature of the city exceeds 35 degrees in the month of May, it may be observed that the incoming flight of the migratory birds may occur in May instead of March. The user may have assumed that the month may have dictated the migration and may ensure that the one or more causal structures form a connection relating the incoming flight of the birds to the month of March. However, the incoming flight of the migratory birds is observed in relation to the temperature of the city, rather than the month. Hence, said connection constitutes an anomaly. In such a scenario, the user can resolve such an anomaly in the GUI, by correcting their assumption and forming a connection between the temperature of the city and the incoming flight of the migratory birds.

In some embodiments, the method further comprises learning structural causal models from the causal discovery process. Herein, the term *"structural causal model"* refers to a mathematical representation that combines the at least one of the one or more causal structures with the latent variables, one or more spurious correlations that were reintroduced, resolved anomalies, to describe relationships between each variable in the plurality of variables. Beneficially, the structural causal models provide a more detailed representation of causal relationships between each variable in the plurality of variables, as compared to the at least one of the one or more causal structures.

In this regard, knowledge related to data science may be applied to analyse and improve processes related to the structural causal models. Optionally, different independence and conditional independence tests may be used to identify a functional relationship among the one or more causal structures. Moreover, if the functional relationship is not specified, in such an event, then the functional relationship is added as a dimension for optimization of the causal discovery process. The structural causal model is a structural equation or a structural function of previously-saved causal structures (i.e., at least one parent node), an exogenous term (for example, such as, a noise), a function relating the previously-saved causal structures and the exogenous term, to quantitatively describe the functional relationship. The function may be a linear function, a polynomial function, or a function derived from a neural network computational model. In this regard, learning the structural causal model involves iterating over each node to train the function to infer that node from at least one parent node in the one or more causal structures and the exogenous term. Subsequently, the structural causal model is trained after the function has been learned for each node in the one or more causal structures. Optionally, the causal discovery process utilizes at least one of: Machine Learning (ML), Artificial Intelligence (AI), Data Science (DS), Data Analysis, Causality, Causal Discovery (CD), Human-in-the-loop (HITL), Automated Machine Learning (AutoML), Automated Causal Discovery, Human Machine Interface (HMI), Human-Computer Interaction (HCI) to learn structural causal models.

For example, the causal discovery process may be executed to model relationship between machine maintenance, production output and product quality in a manufacturing plant. Herein, the machine maintenance may influence both the production output and the product quality. The production output may influence the product quality. The structural equation of the machine maintenance may be a relationship between a maintenance level and an exogenous term, the structural equation of the production output may be a function of how the machine maintenance influences the production output and another exogenous term, the structural equation of the product quality may be a function of how the production output influences the product quality and yet another exogenous term. Hence, the structural causal model is learnt from the causal structure identified by the causal discovery process, and an impact of machine maintenance on production output and product quality may be determined.

In some embodiments, the method further comprises displaying the learned structural causal models onto a Graphical User Interface, GUI, on a display of a user device, and allowing the user to see the performance of and evaluate the learned structural causal models. It will be appreciated, that the user can check performance of the learned structural causal models. Subsequently, in case the performance of the learned structural causal models is unsatisfactory, the user may keep iterating the causal discovery process. Optionally, the user is allowed to edit the learned structural causal models via the GUI. Notably, the user provides the user input corresponding to the domain knowledge of the real-life situation at various processing steps when executing the causal discovery process. The user evaluates the learned structural causal models by how well said learned structural causal models predict certain nodes, i.e., looking at at least one error metric (for example, such as a mean-squared error metric) for out-of-sample data. Additionally, the structural causal model could be used to predict the interventions and the counterfactuals. Continuing in reference with the second example, the customer churn may be predicted after intervening and providing everyone a 20% discount.

For instance, performance of the learned structural causal models may be observed using error metrics calculated on in-sample data and out-of-sample data, wherein a sample data is obtained from the clean dataset. The error metrics may quantify performance of the learned structural causal models and may be used for a quantitative comparison of the learned structural causal models. Furthermore, the step of executing the causal discovery process and/or any of the steps of the method may be reiterated until the evaluation of the learned structural causal model is deemed satisfactory.

A second aspect of the invention provides a system comprising:
an I/O interface;
a memory; and
a processor configured to execute the steps of the method of any one of the first aspect.

In this regard, the term *"I*/*O interface"* as used herein refers to a hardware device that is configured to accept input and process the input data to provide output. Typically, the I/O interface comprises one or more spatially distributed elements, to be used by the user with ease. Beneficially, the I/O interface is designed to allow the user to interact easily, efficiently, and in a user-friendly manner with causal discovery.

The memory may include, but is not limited to, an electronic storage device, a magnetic storage device, an optical storage device, an electromagnetic storage device, a semiconductor storage device, or any suitable combination of the foregoing. Examples of implementation of the memory, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory.

The term *"processor"* as used herein refers to a computational element that is operable to respond to and processes instructions given by the user that drives the user device comprising the I/O interface. The processor includes but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the processor may refer to one or more individual processors, processing devices and various elements associated with a processing device that may be shared by other processing devices. Additionally, one or more individual processors, processing devices and elements are arranged in various architectures for responding to and processing the instructions that are provided on the I/O interface.

A third aspect of the invention provides a computer program comprising instructions which, when the program is executed by a computer, cause the computer to carry out the steps of the method of any one of the first aspect.

The computer program comprising a non-transitory machine-readable data storage medium having stored thereon program instructions that, when accessed by a processing device, cause the processing device to execute steps of the first aspect. The term *"computer program"* refers to a software product comprising program instructions that are recorded on the non-transitory machine-readable data storage medium, wherein the software product is executable upon a computing hardware for implementing the aforementioned steps of the method in the first aspect.

In an embodiment, the non-transitory machine-readable date storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

Throughout the description and claims of this specification, the words *"comprise"* and *"contain"* and variations of the words, for example *"comprising"* and *"comprises",* mean *"including but not limited to",* and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a flowchart depicting steps of a method of generating a causal structure, in accordance with an embodiment of the present disclosure;
Figure 2 is a block diagram representing a system for generating a causal structure, in accordance with an embodiment of the present disclosure; and
Figure 3 is an exemplary process flow for generating a causal structure, in accordance with an embodiment of the present disclosure.

### DETAILED DESCRIPTION

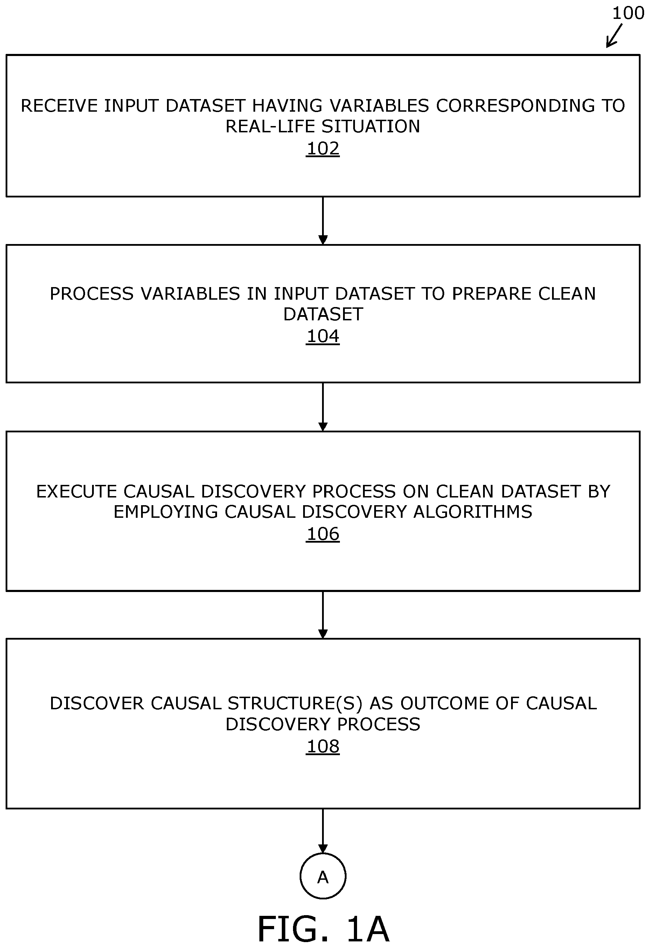

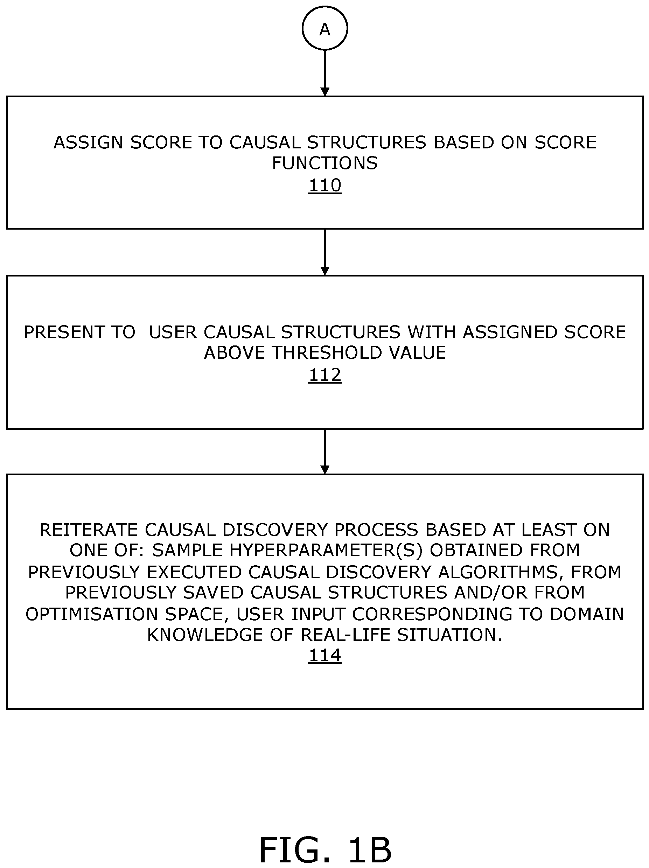

Referring to Figure 1, there is shown a flowchart 100 depicting steps of a method of generating a causal structure, in accordance with an embodiment of the present disclosure. At step 102, an input dataset having a plurality of variables corresponding to a real-life situation is received. At step 104, the plurality of variables in the input dataset are processed to prepare a clean dataset. At step 106, a causal discovery process on the clean dataset is executed by employing one or more causal discovery algorithms. At step 108, one or more causal structures are discovered as an outcome of the causal discovery process. At step 110, a score is assigned to the one or more causal structures based on one or more score functions. At step 112, at least one of the one or more causal structures is presented to a user with the assigned score above a threshold value. At step 114, the causal discovery process is reiterated based on at least one of: one or more sampled hyperparameters obtained from previously executed causal discovery algorithms, from previously saved causal structures and/or from an optimisation space; a user input corresponding to domain knowledge of the real-life situation, for optimizing the one or more causal structures to generate the causal structure representative of causal relationships between the plurality of variables, wherein the causal structure is usable for at least one of: predicting an outcome related to the real-life situation, determining an action to be undertaken related to the real-life situation, predicting one or more new causal structures, simulating data for the real-life situation.

The aforementioned steps are only illustrative and other alternatives can also be provided where one or more steps are added, one or more steps are removed, or one or more steps are provided in a different sequence without departing from the scope of the claims herein.

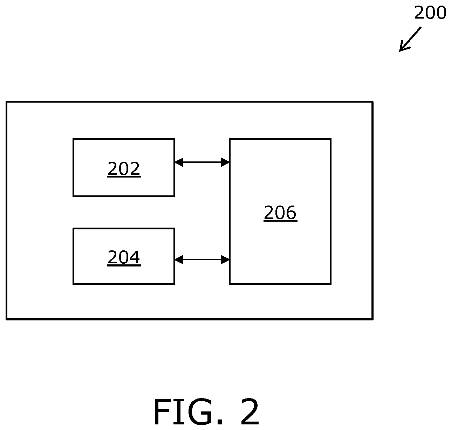

Referring to Figure 2, there is shown a block diagram representing a system 200 for generating a causal structure, in accordance with an embodiment of the present disclosure. As shown, the system 200 comprises an I/O interface 202, a memory 204 and a processor 206. Notably, the I/O interface 202 is configured to receive an input data from a user and provide the received input data to the processor 206. The processor 206 processes the input data to provide an output on to the I/O interface 202. Moreover, the memory 204 is configured to store the one or more discovered causal structures for future reference.

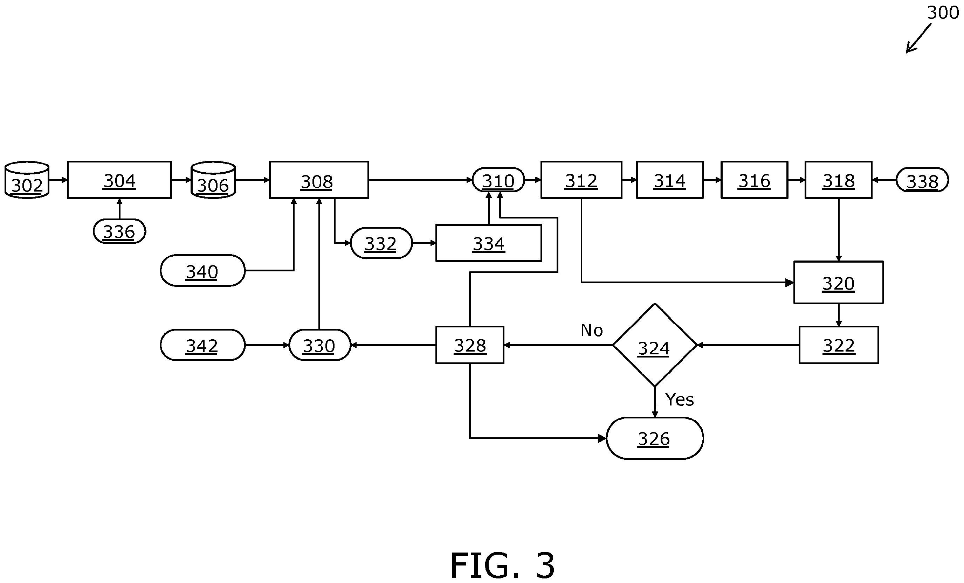

Referring to Figure 3 is an exemplary process flow 300 for generating a causal structure, in accordance with an embodiment of the present disclosure. As shown, an input dataset is received from storage 302 having a plurality of variables corresponding to the real-life situation. Then, the input dataset is provided for processing at a processing pipeline stage 304 to generate a clean dataset. The clean dataset is stored at a storage 306. The clean dataset is then used to execute a causal discovery process at a processing pipeline stage 308. The causal discovery process is configured to produce one or more causal structures at processing pipeline stage 310. Optionally, the one or more causal structures from the processing pipeline stage 310 is then forwarded to a user to allow the user to revise the one or more causal structures at a processing pipeline stage 312. Subsequently, output from the processing pipeline stage 312 is fed to a processing pipeline stage 314 to procure a suggestion for a functional direction. Subsequently, output from the processing pipeline stage 314 acts as an input to a processing pipeline stage 316 to procure a suggestion regarding functional dependency. Then, the output from the processing pipeline stage 316 acts as an input to a processing pipeline stage 318, wherein structural causal models are learned from the causal discovery process.

The one or more causal structures and/or the structural causal models learned from the causal discovery process, is assigned with a score using a scoring model 320. Thereby, output from the scoring model acts as an input to a processing pipeline stage 322, thereby allowing the user to revise the one or more causal structures at a processing pipeline stage 322 based on the assigned score. Subsequently, a decision model 324 is used to make a decision based on the score, wherein the assigned score should be above a threshold value. In case, the assigned score of the one or more causal structures is above the threshold value, then the one or more causal structures are considered to be an optimum causal structure. Alternatively, in case the assigned score of the one or more causal structures is below the threshold value, then the one or more causal structures is rejected. The most optimum causal structures are presented to the user using an I/O interface 326. In case the decision model 324 is not able to determine optimum causal structures, the one or more causal structures are saved at a processing pipeline stage 328. The one or more causal structures saved at the processing pipeline stage 328 pass through a processing pipeline stage 330, wherein the processing pipeline stage 330 comprises one or more sampled hyperparameters which are used to adjust the one or more causal structures in order to refine subsequent iterations of the causal discovery process. The causal discovery process further comprises removing one or more spurious correlations at a processing pipeline stage 332 from the causal structures. Optionally, the user may reintroduce the one or more spurious correlations that was removed earlier, using a processing pipeline stage 334 to the one or more causal structures in the causal discovery process. Optionally, during the processing of the plurality of variables at the processing pipeline stage 304, the processor can be configured. The configuration may be stored at an experiment storage 336. Additionally, the structural causal model is also configured. These configurations of the structural causal model may be stored at an experiment storage 338. Optionally, the causal discovery process is fed with background knowledge. Herein, the background knowledge corresponds to the real-life situation. This background knowledge may be stored at an experiment storage 340 of the real-life situation. Additionally, the one or more sampled hyperparameters are also configured. The configurations of the one or more sampled hyperparameters may be stored at an experiment storage 342. All the storages 302 and 306 are a part of a data repository. All the experiment storages 336, 338, 340, and 342 are a part of an experiment data repository. These storages and/or experiment storages can be implemented separately or together.

Figure 3 is merely an example, which should not unduly limit the scope of the claims herein. A person skilled in the art will recognize many variations, alternatives, and modifications of embodiments of the present disclosure.

## Claims

1. A method of generating a causal structure comprising:
receiving an input dataset having a plurality of variables corresponding to a real-life situation;
processing the plurality of variables in the input dataset to prepare a clean dataset;
executing a causal discovery process on the clean dataset by employing one or more causal discovery algorithms;
discovering one or more causal structures as an outcome of the causal discovery process;
assigning a score to the one or more causal structures based on one or more score functions;
presenting to a user at least one of the one or more causal structures with the assigned score above a threshold value; and
reiterating the causal discovery process on the at least one of the one or more causal structures, based on at least one of:
one or more sampled hyperparameters obtained from previously executed causal discovery algorithms, from previously saved causal structures and/or from an optimisation space;
a user input corresponding to domain knowledge of the real-life situation,
for optimizing the one or more causal structures to generate the causal structure representative of causal relationships between the plurality of variables, wherein the causal structure is usable for at least one of: predicting an outcome related to the real-life situation, determining an action to be undertaken related to the real-life situation, predicting one or more new causal structures, simulating data for the real-life situation.

2. The method of claim 1, further comprising receiving the user input before the step of executing the causal discovery process.

3. The method of claim 1 or 2, further comprising discovering one or more latent variables and connecting the one or more latent variables to the one or more causal structures.

4. The method of claim 3, further comprising estimating a value of at least one of the one or more latent variables.

5. The method of any of preceding claims, further comprising saving or exporting the one or more causal structures that were discovered as the outcome of the causal discovery process, for future reference.

6. The method of any of preceding claims, wherein the step of executing the causal discovery process comprises generating of one or more preliminary causal structures, and removing one or more spurious correlations from the one or more preliminary causal structures to produce the one or more causal structures.

7. The method of claim 6, further comprising allowing the user to reintroduce the one or more spurious correlations removed from the one or more preliminary causal structures in the causal discovery process.

8. The method of any of preceding claims, further comprising ranking the one or more causal structures based on the assigned score.

9. The method of any of preceding claims, wherein the step of presenting to the user the at least one of the one or more causal structures comprises displaying the at least one of the one or more causal structures onto a Graphical User Interface, GUI, on a display of a user device.

10. The method of claim 9, further comprising allowing the user to resolve any anomalies in the at least one of the one or more causal structures by interacting with the GUI.

11. The method of any of preceding claims, further comprising learning structural causal models from the causal discovery process.

12. The method of claim 11, further comprising displaying the learned structural causal models onto a Graphical User Interface, GUI, on a display of a user device, and allowing the user to see the performance of and evaluate the learned structural causal models.

13. The method of any of preceding claims, wherein the method further comprises using the causal structures to perform at least one of: predicting the outcome related to the real-life situation, determining the action to be undertaken related to the real-life situation, predicting the one or more new causal structures, simulating data for the real-life situation.

14. A system comprising:
an I/O interface;
a memory; and
a processor configured to execute the steps of the method of any of claims 1 to 13.

15. A computer program comprising instructions which, when the program is executed by a computer, cause the computer to carry out the steps of the method of any of claims 1 to 13.
